# EUROPÄISCHE PATENTSCHRIFT

(11) **EP 1 395 085 B1**
(45) Veröffentlichungstag und Bekanntmachung des Hinweises auf die Patenterteilung: **24.01.2007**
(21) Anmeldenummer: 03018911.2
(22) Anmeldetag: 20.08.2003
(51) Int. Cl.: H05B 3/48, H05B 3/42, B29C 45/27, B29C 45/74, B29C 47/82, B29C 47/86

(54) **Elektrische Heizeinrichtung für zylindrische Körper**
Electrical heating device for cylindrical bodies
Appareil de chauffage électrique pour des corps cylindriques

(30) Priorität: 22.08.2002 DE 20212918 U
(43) Veröffentlichungstag der Anmeldung: 03.03.2004
(73) Patentinhaber: Türk + Hillinger GmbH, D-78532 Tuttlingen (DE)
(72) Erfinder: Hillinger, Erich, 78532 Tuttlingen (DE)
(74) Vertreter: Neymeyer, Franz

(56) Entgegenhaltungen:
- EP-A- 0 594 933
- EP-A- 0 695 617
- DE-U1- 20 109 413
- US-A- 4 386 262
- US-A- 4 403 405
- US-B1- 6 222 165

## Beschreibung

Die Erfindung betrifft eine elektrische Heizeinrichtung für zylindrische Maschinenteile, insbesondere für Kunststoffspritzdüsen od. dgl., bei dem das Heizmittel aus wenigstens einem, das zylindrische Maschinenteil umschließenden Rohrheizkörper besteht, dessen Heizleiter in einen hochverdichteten und mit einem Metallmantel umschlossenen Magnesiumoxidkern eingebettet ist, wobei der Rohrheizkörper mäanderförmig oder wendelförmig verlaufend in einen aus einem weicheren Metall als der Rohrheizkörper bestehenden Rohrkörper unmittelbar kontaktierend mit wenigstens einem Teil seines Querschnitts unter Bildung einer eingepreßten Rille oder Nut eingebettet ist und der zylindrische Hohlraum des Rohrkörpers als Paßbohrung zur spaltfreien Aufnahme des zylindrischen Maschinenteils ausgebildet ist.

Es ist bereits eine elektrische Heizeinrichtung für Kunststoff-Spritzdüsen bekannt (DE 201 09 413.4), bei der ein Rohrheizkörper mäanderförmig verlaufend zwischen zwei radial miteinander verpreßten Rohrkörpern angeordnet und bei einer Ausführungsform nur in den inneren der beiden Rohrkörper unmittelbar kontaktierend mit seinem ganzen Querschnitt unter Bildung einer eingepreßten Rille oder Nut eingebettet ist. Der zylindrische Hohlraum des inneren Rohrkörpers ist als Paßbohrung zur spaltfreien Aufnahme des zylindrischen Maschinenteils ausgebildet.

Bei dieser Ausführung ist der innere Rohrkörper und sind die Windungen des Rohrheizkörpers von einem aufgepreßten, harten Metallmantel umschlossen.

Bei anderen Ausführungsformen ist der Rohrheizkörper, der statt mäanderförmig auch ohne weiteres wendelförmig verlaufen kann, durch radiales Verpressen jeweils mit seinem halben Querschnitt in den inneren und den äußeren Rohrkörper eingebettet, derart, daß sich die beiden Rohrkörper im Bereich des halben Querschnitts des Rohrheizkörpers berühren.

Diese bekannte Heizeinrichtung weist somit bei allen Ausführungen jeweils zwei metallene Rohrkörper auf, die radial miteinander verpreßt sind.

Bei einem anderen bekannten Heizkörper (US-B1 6 222 165) ist eine Rohrheizkörper in die vorgefertigte schwalbenschwanzartig profilierte Nut eines ebenen Plattenkörpers so eingepreßt, dass ein Teil seines Querschnitts die mit der Nut versehene Fläche auch nach dem Einpressen noch überragt. Mit dem Einpressen wird lediglich eine verbreiternde Verformung des Rohrheizkörpers erzielt, damit sich der Rohrheizkörper in der Nut hält. Der Plattenkörper wird nachträglich mit dem nach innen teilweise überstehenden Rohrheizkörper zu einem runden Rohr gebogen. Eine Paßbohrung weißt dieses Rohr nicht auf. Vielmehr handelt es sich bei diesem Rohr um einen längsseitig offenen Körper, der mittels Spannschrauben in geschlossenem Zustand gehalten wird.

Der Erfindung liegt die Aufgabe zugrunde, eine Heizeinrichtung der eingangs genannten Art zu schaffen, die einfacher herstellbar ist und radial weniger Raum beansprucht.

Gelöst wird diese Aufgabe erfindungsgemäß dadurch, daß der Rohrheizkörper (1, 1') unter Bildung einer seinem Durchmesser entsprechend tiefen eingepreßten Nut (14) mit seinem ganzen Querschnitt in die zylindrischen Innenfläche (6) des das Paßmaß (D) aufweisenden Hohlraums (8) des Rohrkörpers (5) eingepreßt ist.

Die erfindungsgemäße Heizeinrichtung ist ohne Einbeziehung des zu beheizenden Maschinenteils separat herstellbar. Aufgrund der radialen Verdichtung des nur einfach vorhandenen Rohrkörpers ist auch eine kompaktere, d.h. radial wenig Raum beanspruchende, Bauweise möglich. Durch die Paßbohrung des inneren Rohrkörpers wird auch ein guter Wärmeübergang zwischen der Heizeinrichtung und dem zu beheizenden Maschinenteil gewährleistet, wobei sowohl die Möglichkeiten des nachträglichen Aufsetzens der Heizeinrichtung auf das zu beheizende Maschinenteil als auch des einfachen Abnehmens, besondere Vorteile darstellen. Ein weiterer bedeutender Vorteil ist darin zu sehen, daß in den Rohrkörper für die Aufnahme des mäanderförmig oder wendelförmig verlaufenden Rohrheizkörpers keine vorgefertigten Nuten eingearbeitet werden müssen, weil diese unmittelbar beim Verpressen der beiden Rohrkörper von dem oder den Rohrheizkörpern geformt werden und dabei zwangsläufig die optimale Paßform für eine spaltfreie und lükkenlose Kontaktierung erhalten.

Vorteilhafte Ausgestaltungen der Erfindung sind Gegenstand der Ansprüche 2 bis 6.

Anhand der Zeichnung wird die Erfindung im folgenden näher erläutert. Es zeigt:
- Fig. 1: in isometrischer Perspektivansicht eine zylinderförmige Heizeinrichtung;
- Fig. 2: die Heizeinrichtung der Fig. 1 in Seitenansicht;
- Fig. 3: einen Schnitt III-III aus Fig. 2;
- Fig. 3a: eine stark vergrößerte Querschnittsdarstellung des Rohrheizkörpers;
- Fig. 4: den gleichen Schnitt III-III aus Fig. 2 in unverpreßtem Zustand;
- Fig. 5: ein andere Ausführungsform der Heizeinrichtung im Schnitt;
- Fig. 6: einen Schnitt gemäß der Schnittlinie VI-VI aus Fig. 5;

Die in der Zeichnung dargestellte elektrische Heizeinrichtung dient zum Beheizen zylindrischer Maschinenteile, insbesondere zum Beheizen von Kunststoff-Spritzdüsen od. dgl. Das elektrische Heizmittel besteht aus einem oder mehreren Rohrheizkörpern 1, dessen bzw. deren Heizleiter 2 in einem hochverdichteten und mit einem Metallmantel 3 umschlossenen Magnesiumoxidkern 4 eingebettet ist.

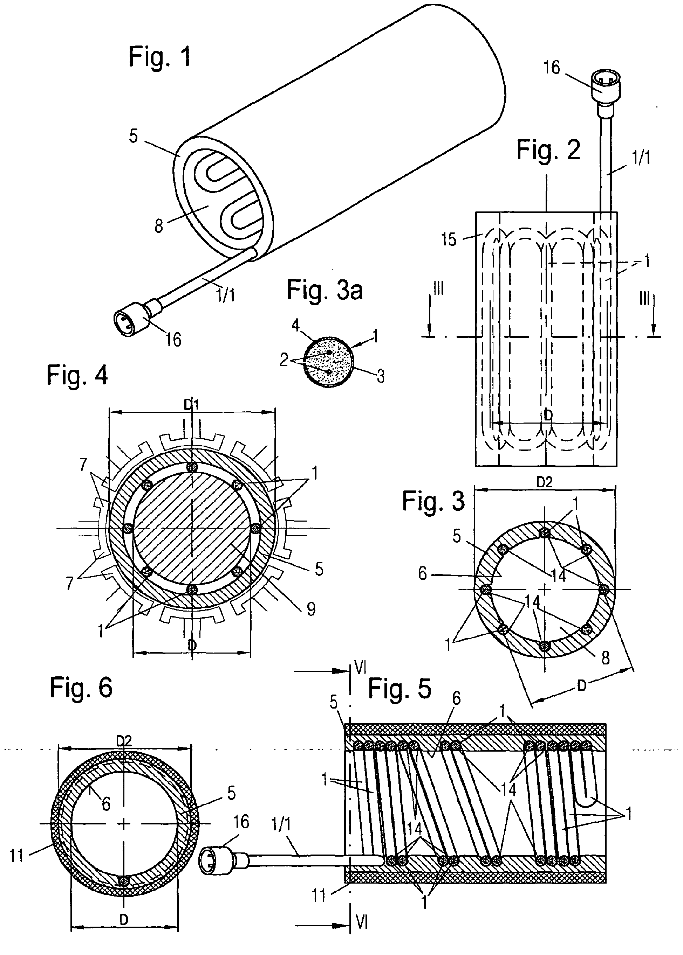

Der Rohrheizkörper 1 ist bei der Ausführungsform der Fig. 1 bis 4 mäanderförmig verlaufend in die Innenfläche 6 eines radial auf einem zylindrischen gehärteten Metallkern 9 verpreßten Rohrkörpers 5 unter Bildung einer zusammenhängenden, eingepreßten Nut 14 eingebettet. Während die Schnittdarstellung der Fig. 3 die fertige Heizeinrichtung zeigt, ist in der Schnittdarstellung der Fig. 4 die Anordnung in ihrer ursprünglichen unverpreßten Form dargestellt.

Der Rohrkörper 5 besteht aus Aluminium, Kupfer oder geglühtem Messing, das weicher ist als der vorverdichtete Rohrheizkörper 1 mit seinem Metallmantel 3.

Das radiale Verpressen dieses Rohrkörpers 5 mit dem mäanderförmig verlaufend, auf dem Umfang des zylindrischen Metallkerns 9 liegenden Rohrheizkörper 1 erfolgt mittels einer Vielzahl von radial beweglichen, gewölbten Preßplatten 7, die in Fig. 4 nur schematisch dargestellt sind.

Nach dem Verpressen weist der Rohrkörper 5 die in Fig. 3 dargestellte Querschnittsform auf, in welcher der Rohrheizkörper 1 jeweils mit seinem ganzen Querschnitt unmittelbar kontaktierend und unter Bildung einer jeweils eingepreßten Rille oder Nut 14 in den Rohrkörper 5 eingebettet ist.

Zur Erhaltung bzw. Erzielung eines Paßmaßes des Innendurchmessers D des zylindrischen Hohlraums 8 des Rohrkörpers 5, ist der während des Preßvorganges im Rohrheizkörper liegende Metallkern 9 entsprechend kalibriert. Nach dem Verpressen wird der Metallkern 9 herausgezogen.

Durch den Metallkern 9 erhält der Hohlraum 8 des inneren Rohrkörpers 6 die Form einer Paßbohrung, die geeignet ist, ein Maschinenteil, das einen dem Metallkern 9 entsprechend kalibrierten Durchmesser D aufweist, spaltfrei aufzunehmen.

Ein Vergleich der Fig. 3 und 4 zeigt, daß der ursprüngliche Außendurchmesser D1 des Rohrkörpers 5 während des Preßvorganges auf einen Durchmesser D2 verkleinert wird, der etwa 15% bis 20% kleiner ist als D1.

In Fig. 5 ist im Schnitt eine Ausführungform der Heizeinrichtung dargestellt, die sich von derjenigen der Fig. 3 nur dadurch unterscheidet, daß der Rohrheizkörper 1' zweigängig wendelförmig verläuft und der Rohrkörper 5 mit einem zusätzlichen, nachträglich aufgebrachten Wärme-Isolierstoffmantel 11 versehen ist. Der Rohrkörper 5 ist nach der gleichen Methode, wie oben beschrieben, mit dem Rohrheizkörper 1' verpreßt. Entsprechend dem Verlauf der Windungen des Rohrheizkörpers 1' verläuft auch die zweigängige Nut 14 wendelförmig.

Es versteht sich, daß auch bei dieser Heizeinrichtung das Verpressen unter Verwendung eines kalibrierten Metallkerns 9 erfolgt, so daß auch diese Heizeinrichtung praktisch spaltfrei, d.h. mit guter Wärmeübertragung, auf ein entsprechend kalibriertes zylindrisches Maschinenteil, z. B. auf eine Spritzdüse eines Kunststoff-Spritzautomaten, aufgesetzt, d.h. aufgeschoben, werden kann.

Wie bei der bekannten, eingangs erwähnten Heizeinrichtung ist es mit Hilfe der beschriebenen Herstellungsmethode möglich, die Heizeinrichtung separat herzustellen und im fertigen Zustand auf einfache Weise auf das zu beheizende Maschinenteil aufzubringen und dort auf geeignete Weise zu fixieren, so daß es ggf. auch wieder leicht abgenommen und ausgetauscht werden kann.

Bei allen dargestellten und beschriebenen Ausführungsformen ist der stirnseitig aus dem Rohrkörper 5 der Heizeinrichtung herausragende Abschnitt 1/1 des Rohrheizkörpers 1 bzw. 1' mit einem elektrischen Steckanschluß 16 versehen.

Selbstverständlich ist es auch ohne weiteres möglich, im Rohrkörper einen Thermofühler oder dgl. anzubringen, mit dem die Wärmeerzeugung gesteuert werden kann.

## Patentansprüche

1. Elektrische Heizeinrichtung für zylindrische Maschinenteile, insbesondere für Kunststoffspritzdüsen od. dgl., bei dem das Heizmittel aus wenigstens einem, das zylindrische Maschinenteil umschließenden Rohrheizkörper (1) besteht, dessen Heizleiter (2) in einen hochverdichteten und mit einem Metallmantel umschlossenen Magnesiumoxidkern (4) eingebettet ist, wobei der Rohrheizkörper (1) mäanderförmig oder wendelförmig verlaufend in einen aus einem weicheren Metall als der Rohrheizkörper bestehenden Rohrkörper (5) unmittelbar kontaktierend mit wenigstens einem Teil seines Querschnitts unter Bildung einer eingepreßten Rille oder Nut (14) eingebettet ist und der zylindrische Hohlraum (8) des Rohrkörpers (5) als Paßbohrung zur spaltfreien Aufnahme des zylindrischen Maschinenteils ausgebildet ist,
**dadurch gekennzeichnet,**
**daß** der Rohrheizkörper (1, 1') unter Bildung einer seinem Durchmesser entsprechend tiefen, eingepreßten Nut (14) mit seinem ganzen Querschnitt in die zylindrischen Innenfläche (6) des das Paßmaß (D) aufweisenden Hohlraums (8) des Rohrkörpers (5) eingepreßt ist.

2. Elektrische Heizeinrichtung nach Anspruch 1, **dadurch gekennzeichnet, daß** der Rohrkörper (5) aus Aluminium besteht.

3. Elektrische Heizeinrichtung nach Anspruch 1, **dadurch gekennzeichnet, daß** der Rohrkörper (5) aus Kupfer oder einer Kupferlegierung besteht.

4. Elektrische Heizeinrichtung nach Anspruch 2, **dadurch gekennzeichnet, daß** der Rohrkörper (5) aus weichgeglühtem Messing besteht.

5. Elektrische Heizeinrichtung nach Anspruch 1 oder einem der Ansprüche 2 bis 4, **dadurch gekennzeichnet, daß** der Rohrkörper (5) während des radial verkleinernden Preßvorgangs mit einem kalibrierten gehärteten zylindrischen Metallkern (9) versehen ist.

6. Elektrische Heizeinrichtung nach einem der Ansprüche 1 bis 5, **dadurch gekennzeichnet, daß** der Rohrkörper (5) von einem Wärme-Isolierstoffmantel (11) umgeben ist.

## Claims

1. Electrical heating device for cylindrical machine parts, in particular for plastic injection nozzles or the like, in which the heating means consists of at least one tubular heating body (1) surrounding the cylindrical machine part, the heating conductor (2) of which is embedded in a highly compacted magnesium oxide core (4) surrounded by a metal coating, whereby the tubular heating body (1) is embedded in a meandering or spiral shape in a tubular body (5), made of a softer metal than the tubular heating body, in direct contact with at least one part of its cross section forming a pressed in channel or groove (14), and the cylindrical cavity (8) of the tubular body (5) is designed as a pass bore for the gapless mounting of the cylindrical machine part,
**characterised in that**
the tubular heating body (1, 1'), forming a pressed in groove (14) with a depth corresponding to its diameter, is pressed with its entire cross section into the cylindrical inner surface (6) of the cavity (8) of the tubular body (5) with the pass dimension (D).

2. Electrical heating device according to claim 1, **characterised in that** the tubular body (5) is made of aluminium.

3. Electrical heating device according to claim 1, **characterised in that** the tubular body (5) is made of copper or a copper alloy.

4. Electrical heating device according to claim 2, **characterised in that** the tubular body (5) is made of soft annealed brass.

5. Electrical heating device according to claim 1 or one of claims 2 to 4, **characterised in that** the tubular body (5) is provided during the radially reducing pressing procedure with a calibrated hardened cylindrical metal core (9).

6. Electrical heating device according to one of claims 1 to 5, **characterised in that** the tubular body (5) is surrounded by a heat-insulating material coating (11).

## Revendications

1. Dispositif de chauffage électrique pour des pièces de machine cylindriques, en particulier pour des buses d'injection en matière plastique ou analogues, dans lequel le moyen de chauffage se compose d'au moins un élément chauffant tubulaire (1) entourant la pièce de machine cylindrique, dont le conducteur chauffant (2) est enrobé dans un noyau en oxyde de magnésium (4) fortement comprimé et entouré d'une enveloppe métallique, l'élément chauffant tubulaire (1) étant encastré en méandre ou en spirale dans un corps tubulaire (5) composé d'un métal plus tendre que l'élément chauffant tubulaire (1) en le contactant directement par au moins une partie de sa section en formant une gorge ou une rainure (14) produite par enfoncement et la cavité cylindrique (8) du corps tubulaire (5) étant conformée en trou d'ajustage destiné à recevoir sans jeu la pièce de machine cylindrique,
**caractérisé par le fait**
**que** l'élément chauffant tubulaire (1, 1') est enfoncé par toute sa section dans la surface intérieure cylindrique (6) de la cavité (8) du corps tubulaire (5) présentant la cote d'ajustage (D) en formant une rainure (14) enfoncée d'une profondeur correspondant à son diamètre.

2. Dispositif de chauffage électrique selon la revendication 1, **caractérisé par le fait que** le corps tubulaire (5) est en aluminium.

3. Dispositif de chauffage électrique selon la revendication 1, **caractérisé par le fait que** le corps tubulaire (5) est en cuivre ou en un alliage de cuivre.

4. Dispositif de chauffage électrique selon la revendication 2, **caractérisé par le fait que** le corps tubulaire (5) est en laiton recuit doux.

5. Dispositif de chauffage électrique selon la revendication 1 ou l'une des revendications 2 à 4, **caractérisé par le fait que** le corps tubulaire (5) est muni d'un noyau métallique cylindrique (9) trempé calibré pendant le processus de pressage réduisant le rayon.

6. Dispositif de chauffage électrique selon l'une des revendications 1 à 5, **caractérisé par le fait que** le corps tubulaire (5) est entouré d'une enveloppe calorifuge (11).
